# FASCICULE DE BREVET EUROPEEN

(11) **EP 3 132 572 B1**
(45) Date de publication et mention de la délivrance du brevet: **13.02.2019**
(21) Numéro de dépôt: 15714565.7
(22) Date de dépôt: 04.03.2015
(51) Int. Cl.: H04L 12/40, H02P 9/00

(54) **PROCEDE ET DISPOSITIF DE COMMUNICATION D'UN REGULATEUR DE TENSION D'UN ALTERNATEUR DE VEHICULE AUTOMOBILE SUR UN RESEAU EMBARQUE, REGULATEUR DE TENSION ET ALTERNATEUR CORRESPONDANTS**
KOMMUNIKATIONSVERFAHREN UND VORRICHTUNG EINES SPANNUNGSREGLERS EINER LICHTMASCHINE EINES KRAFTFAHRZEUGS BEI EINEM BORDNETZWERK SOWIE ENTSPRECHENDER SPANNUNGSREGLER UND LICHTMASCHINE
COMMUNICATION METHOD AND DEVICE OF A VOLTAGE REGULATOR OF A MOTOR VEHICLE ALTERNATOR ON AN ONBOARD NETWORK, AND CORRESPONDING VOLTAGE REGULATOR AND ALTERNATOR

(30) Priorité: 14.04.2014 FR 1453289
(43) Date de publication de la demande: 22.02.2017
(73) Titulaire: Valeo Equipements Electriques Moteur, 94046 Créteil Cedex (FR)
(72) Inventeur: LABISTE, Laurent, F-94100 Saint Maur des Fossés (FR); CHASSARD, Pierre, F-94000 Creteil (FR); TISSERAND, Pierre, F-94450 Limeil Brevannes (FR); RAGAINE, Pierre-François, F-77120 Saints (FR)
(74) Mandataire: Duprez, Richard
(86) Numéro de dépôt international: PCT/FR2015/050526
(87) Numéro de publication internationale: WO 2015/158972

(56) Documents cités:
- US-A1- 2010 079 118
- Infineon: "TLE8880 Alternator control with LIN interface", , 26 juillet 2013 (2013-07-26), XP055156607, Extrait de l'Internet: URL:http://www.infineon.com/dgdl/TLE8880-D atasheet-v2.3.pdf?folderId=db3a30431ddc937 2011e26863f92474e&fileId=5546d461464245d30 1468a9fd2aa663f&ack=t [extrait le 2014-12-03]

## Description

### DOMAINE TECHNIQUE DE L'INVENTION.

La présente invention concerne un procédé et un dispositif de communication d'un régulateur de tension d'un alternateur de véhicule automobile, ainsi qu'un régulateur de tension comprenant ce dispositif de communication et qu'un alternateur comprenant ce régulateur de tension.

### ARRIERE PLAN TECHNOLOGIQUE DE L'INVENTION.

Dans le domaine de l'automobile, il est bien connu de maintenir la tension fournie au réseau électrique de bord par l'alternateur du véhicule à une valeur de consigne prédéterminée, indépendamment de la vitesse de rotation du moteur ou de la consommation électrique des équipements, au moyen d'un dispositif de régulation dit « régulateur ».

De nos jours, les équipementiers de l'automobile ont développé des alternateurs très performants en mettant en oeuvre des systèmes électroniques de puissance contrôlés par des circuits faisant appel à des techniques numériques, reposant notamment sur l'utilisation de microprocesseurs, microcontrôleurs ou logique câblée.

Le document technique publié par Infineon, intitulé "TLE8880 Alternator control with LIN interface" décrit un dispositif de contrôle d'un altérnateur avec une interface LIN.

A la différence des régulateurs à bilames d'autrefois, qui fonctionnaient autour d'une tension de régulation fixe indépendamment du mode de fonctionnement du véhicule, les dispositifs de régulation électroniques modernes mettent à profit les capacités de traitement de l'électronique pour recevoir des valeurs de consigne variables transmises par une unité de contrôle du moteur dans le but d'optimiser le prélèvement de couple en fonction de la production d'énergie électrique nécessaire.

L'unité de contrôle du moteur peut dialoguer avec le régulateur de l'alternateur et commander un mode de fonctionnement particulier de celui-ci.

L'information transmise en retour à l'unité de contrôle du moteur est bien souvent une information relative à un courant d'excitation de l'alternateur.

Selon les constructeurs d'automobiles, les signaux représentatifs de cette information sont différents.

Une telle situation a pour conséquence de rendre la tâche de l'équipementier plus difficile et d'augmenter les coûts, car celui-ci doit en permanence adapter et modifier ses circuits afin de répondre à des besoins de clients différents.

Afin de pallier ces inconvénients, la société VALEO EQUIPEMENTS ELECTRIQUES MOTEUR a proposé dans la demande FR2938135 un régulateur de tension modulaire comprenant un circuit de régulation et une interface programmable.

Les caractéristiques courantes de l'interface sont sélectionnées par une instruction de programmation pour répondre aux spécifications d'une application parmi un ensemble de caractéristiques prédéterminées.

Un problème similaire se pose quand l'interface doit être adaptée électriquement en fonction des applications à des tensions de service différentes, par exemple 12 V ou 48 V, et commander des courants d'excitation également différents, par exemple pour un alternateur de véhicule de tourisme ou pour un alternateur de véhicule utilitaire lourd.

Même si le circuit de régulation est réalisé sous la forme d'un ASIC (acronyme de "Application Specific Integrated Circuit" en terminologie anglaise, c'est-à-dire "circuit intégré pour application spécifique") standard pour toutes les applications, alors qu'un circuit d'interface est réalisé sous la forme d'un autre ASIC, changeant en fonction de l'application, les nombreuses interconnexions externes (dites "bonding" en anglais) requises entre les deux circuits rendent difficile la mise en oeuvre d'une telle solution.

L'entité inventive a déjà apporté une solution à ce problème en concevant un régulateur de tension modulaire dans lequel le circuit d'interface et le circuit de régulation constituent respectivement un premier bloc électronique et un second bloc électronique distincts reliés par une liaison série bidirectionnelle synchrone.

Toutefois, si les liaisons électriques entre le régulateur et l'unité de contrôle du moteur ont été simplifiées et standardisées par la mise en oeuvre de bus de terrain de type LIN (acronyme de "Local Interconnection Network" en terminologie anglaise, c'est-à-dire "Réseau Local d'Interconnection"), la structure des trames du protocole, leur contenu et leur interprétation sont divergents selon les spécifications des constructeurs de véhicules.

Depuis la version initiale 1.0 de 1999 jusqu'à la version 2.2A de 2010, et ISO17987, les spécifications du réseau LIN ont connu plusieurs évolutions tendant à faciliter l'intégration d'un réseau et à l'amélioration des caractéristiques temps réel.

Tous les détails de ces spécifications sont bien connus de l'homme de métier, et seuls seront rappelés ci-après ceux nécessaires à la compréhension de l'invention. L'échange d'information sur le réseau LIN est basé sur la présence d'une station maître et d'une ou plusieurs stations esclaves. La communication est toujours faite à l'initiative de la station maître qui envoie un en-tête de message comprenant un silence suivi d'un octet de synchronisation, et d'un octet d'identification ou identificateur.

Une station esclave ayant décodé un identificateur prédéterminé, transmet une trame de données en réponse comprenant plusieurs octets de données et une somme de contrôle.

L'en-tête et la trame de données forme une trame de message.

Il est a noté que l'identificateur du message est représentatif du contenu du message, mais pas de sa destination.

Un identificateur IDF[7:0] est formé d'un identifiant ID[0:5] codé sur six bits et de deux bit de parité P0=ID0+ID1+ID2+ID4 (mod. 2) et P1=ID1+ID3+ID4+ID5 (mod. 2).

Il existe 64 identifiants différents, mais seuls les 60 premiers (de 00 à 3B, en représentation hexadécimale) correspondent à des trames de messages.

Les quatre derniers identifiants sont des identifiants spéciaux, notamment de trame de commande, de configuration et de diagnostics.

Par exemple, la table suivante établit la liste des identifiants et des identificateurs valides selon la révision 2.0 des spécifications du protocole LIN :

**Table I**

| Identifiant ID[0:5] | Identificateur IDF[7:0] | Type de trame |
|---|---|---|
| 00 à 3B | P1P0ID[5 :0] | Trame de message |
| 3C | 3C | Trame de commande (requête de la station maître) |
| 3D | 7D | Trame de commande (réponse de la station esclave dans la trame) |
| 3E | FE | Trame étendue définie par l'utilisateur |
| 3F | BF | Trame de type étendu futur |

Cette table montre que le nombre de champs, leur taille, leur position et leur interprétation peuvent être très variables tout en restant dans la norme.

Au cours des évolutions du standard, les caractéristiques principales du réseau LIN n'ont pas été fondamentalement modifiées, et son débit est toujours limité à 20 Kbit/s en raison de contraintes de compatibilité électromagnétique et de synchronisation d'horloge sans utilisation de quartz ou de résonateur céramique.

Il y a une multitude de versions de LIN selon les constructeurs.

Actuellement les différents régulateurs pour alternateurs sur le marché restent des produits « sur mesure » nécessitant systématiquement une modification du matériel (nouveau jeux de masque des ASIC) dès la moindre variation de champs transmis par le protocole LIN, que ce soit la position de ces champs, leur longueur, leur résolution ou leur interprétation, voire tout simplement en cas de changement d'adresse sur le bus.

Ces régulateurs gèrent tous un formatage fixe des trames avec une interprétation figée des valeurs (résolution, gain, points particuliers...), et seules des valeurs par défaut sont paramétrables et stockées dans une mémoire, par exemple de type EEPROM (acronyme de "Electrically Erasable Programmanle Read Only Memory" en terminologie anglaise, c'est-à-dire "Mémoire Morte Effaçable et Programmable Electriquement").

Il existe donc un besoin pour une interface LIN - régulateur avec une couche de présentation configurable permettant d'adresser les différents types d'encodages de trames actuels tels que le LIN de l'Union de l'Industrie Allemande (VDA) de types A et B, et d'autres LINs actuels utilisés en Europe et au Japon par exemple, tout en ayant une flexibilité suffisante afin de répondre à de nouveaux formatages (par exemple celui utilisé par un constructeur américain basé sur du VDA, mais avec des champs additionnels).

### DESCRIPTION GENERALE DE L'INVENTION.

La présente invention vise par conséquent à répondre à ce besoin.

Selon un premier aspect, l'invention concerne un procédé de communication d'un régulateur de tension d'un alternateur de véhicule automobile sur un réseau embarqué du véhicule du type de ceux consistant à échanger des trames d'informations sur un bus série selon un ou plusieurs protocoles propriétaires différents compatibles avec un protocole standardisé.

Conformément à l'invention, les trames d'informations sont codées ou décodées en fonction de commandes et d'états d'un régulateur de tension standard présentant des caractéristiques prédéterminées, et le procédé comporte les étapes de :
- lecture ou écriture des champs des trames d'informations en fonction de leurs emplacements et de leurs longueurs prédéterminés ;
- conversion des valeurs des champs par une interpolation linéaire; et
- adressage des registres de commande et d'état du régulateur de tension standard en fonction de paramètres prédéterminés.

Dans un mode de réalisation particulier, le protocole standardisé est le protocole de Réseau Local d'Interconnexion (LIN).

Selon une caractéristique particulière, on réalise l'interpolation susmentionnée par un nombre variable de segments définis chacun par une valeur limite, un gain et un offset prédéterminés.

Selon un autre aspect, l'invention concerne un dispositif de communication d'un régulateur de tension d'un alternateur de véhicule automobile sur un réseau embarqué apte à la mise en oeuvre du procédé de communication tel que décrit brièvement ci-dessus, dans lequel des trames d'informations sont échangées sur un bus série selon un ou plusieurs protocoles propriétaires différents compatibles avec un protocole standardisé. Conformément à l'invention, le dispositif de communication comprend :
des moyens pour coder ou décoder les trames d'informations en fonction de commandes et d'états d'un régulateur de tension standard présentant des caractéristiques prédéterminées ;
des moyens pour lire ou écrire des champs des trames d'informations en fonction de leurs emplacements et de leurs longueurs prédéterminés;
des moyens pour convertir des valeurs des champs par une interpolation linéaire; et
des moyens pour adresser des registres de commande et d'état du régulateur de tension standard en fonction de paramètres prédéterminés.

L'invention concerne également un support d'enregistrement lisible par ordinateur et un produit programme d'ordinateur, ainsi qu'un régulateur de tension comprenant le dispositif de communication décrit brièvement ci-dessus et un alternateur comprenant le régulateur sus-mentionné.

Ces quelques spécifications essentielles auront rendu évidents pour l'homme de métier les avantages apportés par le procédé et le dispositif de communication d'un régulateur de tension selon l'invention, ainsi que par le régulateur de tension et l'alternateur correspondants, par rapport à l'état de la technique antérieur.

Les spécifications détaillées de l'invention sont données dans la description qui suit en liaison avec les dessins ci-annexés. Il est à noter que ces dessins n'ont d'autre but que d'illustrer le texte de la description et ne constituent en aucune sorte une limitation de la portée de l'invention.

### BREVE DESCRIPTION DES DESSINS.

La **Figure 1** est un schéma synoptique d'un régulateur de tension d'alternateur de véhicule automobile connu de l'état de la technique.
La **Figure 2** est un exemple de trames de données échangées sur un réseau LIN par un régulateur de tension connu de l'état de la technique.
Les **Figures 3a et 3b** sont d'autres exemples de trames de données transmises à deux régulateurs de tension connus de l'état de la technique différents dont l'interprétation est montrée sur la **Figure 3c****.**
La **Figure 4a** est un exemple supplémentaire d'une trame d'informations transmise et dont l'interprétation est montrée sur la **Figure 4b****.**
Les **Figures 5** **et** **6** illustrent le procédé et le dispositif de communication d'un régulateur de tension selon l'invention, respectivement en réception et en emission.
La **Figure 7** est un schéma de principe du dispositif de communication d'un régulateur de tension selon l'invention.
La **Figure 8a** est encore un exemple de trame d'informations et la **Figure 8b** montre un résultat du décodage de cette trame par le dispositif de communication selon l'invention.
La **Figure 9** illustre de manière détaillée le décodage de la trame d'informations montrée sur la **Figure 8a****.**

### DESCRIPTION DES MODES DE REALISATION PREFERES DE L'INVENTION.

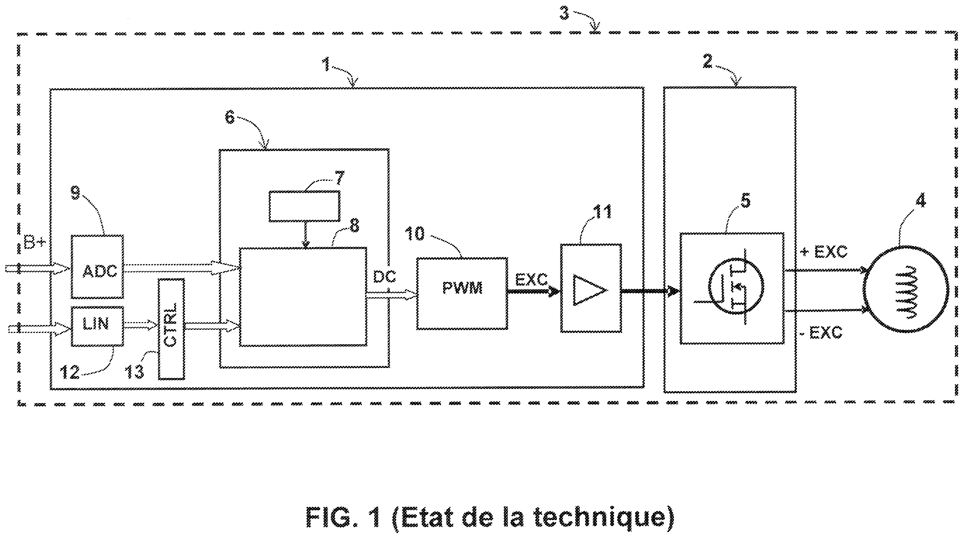

Un schéma d'un régulateur de tension 1, 2 du type concerné par l'invention est représenté sur la **Figure 1****.**

Il s'agit d'un régulateur de tension 1, 2 de batterie B+ intégré dans un alternateur 3 à excitation 4 pour une application dans un véhicule automobile.

Comme le montre ce schéma synoptique, le régulateur de tension comprend essentiellement deux parties 1, 2: un circuit de contrôle 1 constitué par un ASIC, et une électronique de puissance 2 comportant des transistors 5 de type MOSFET (transistor à effet de champ à grille isolée) de contrôle du courant d'excitation +EXC,-EXC appliqué au bobinage d'excitation 4.

L'ASIC de contrôle 1 comprend notamment :
- une unité de contrôle 6 et une mémoire 7 comportant des séquences d'instructions 8 réalisant notamment les fonctions de régulation;
- un convertisseur analogique-numérique 9 destiné à acquérir des échantillons de la tension continue B+ produite par la machine ;
- un générateur 10 d'impulsions modulées en durée EXC ;
- un amplificateur 11 de ces impulsions EXC commandant les transistors 5 de l'électronique de puissance 2.

La valeur de consigne de la boucle de régulation est fixée via un circuit d'interface 12 avec le réseau de bord au standard LIN (réseau local d'interconnexion) et un registre de contrôle 13.

Le protocole LIN permet de transférer un nombre important de données, mais a abouti selon les constructeurs, comme il a été rappelé en préambule, à une divergence à la fois sur la fréquence (baudrate) d'utilisation, sur le nombre des champs transmis, leur taille, leur position et sur leur interprétation.

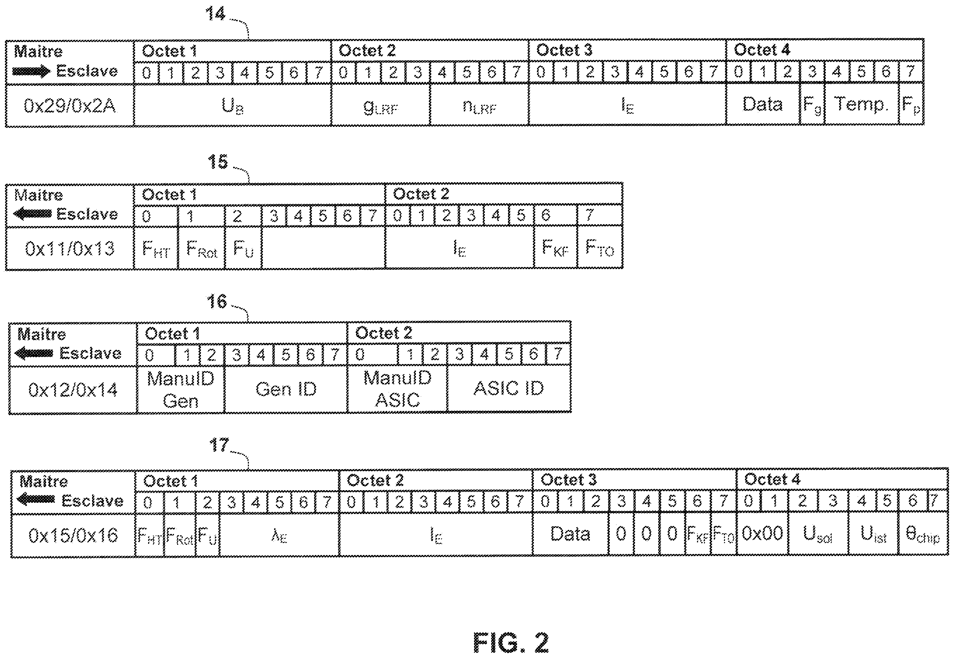

La **Figure 2** montre un exemple de trame d'informations 14 générée par un dispositif maître à destination du circuit de contrôle 1 du régulateur de tension 1, 2.

Cette figure montre également des trames de données 15, 16, 17 générées en réponse par le circuit de contrôle 1.

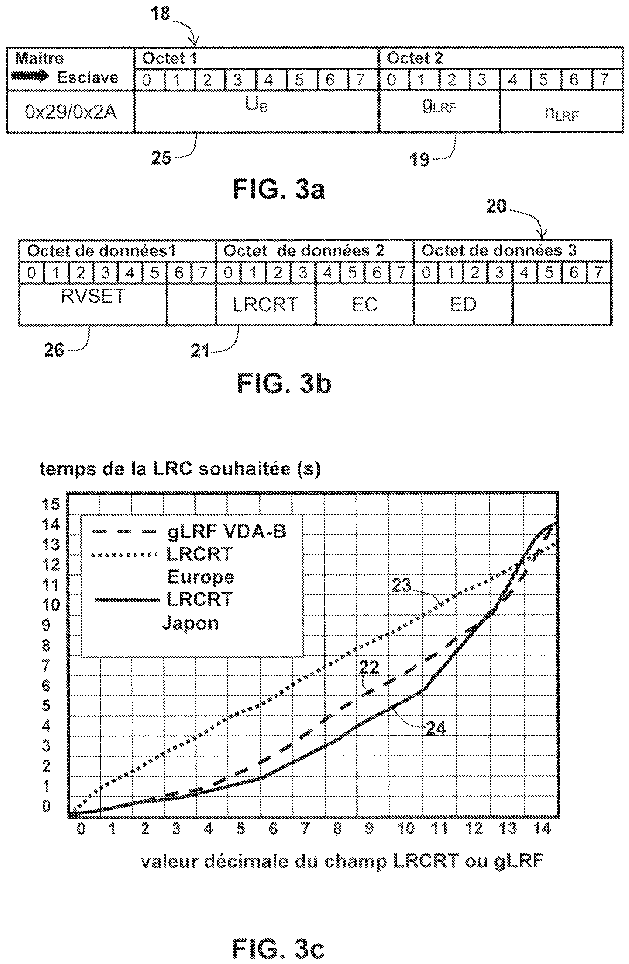

La **Figure 3a** montre une autre trame d'information 18 contenant un champ de données 19 spécifique au contrôle de charge progressive (paramètre gLRF indiquant le temps de réponse à une variation de la charge sur le réseau électrique de bord dans le cadre de la fonction LRC du régulateur de tension; LRC est l'acronyme en terminologie anglaise de "Load Response Control") pour un certain modèle d'alternateur 3.

La **Figure 3b** montre une autre trame d'information 20 contenant un champ de données 21 transmettant un autre paramètre LRCRT ayant une finalité identique au champ de données précédent pour un autre modèle d'alternateur 3.

La **Figure 3c** montre que les valeurs décimales de ces champs ont une signification différente en terme de temps de la LRC souhaitée.

Le décodage du champ gLRF (courbe en tireté 22) selon la variante VDA-B du protocole conduit à des temps en secondes systématiquement inférieurs à ceux résultant du décodage du champ LRCRT (courbe en pointillé 23) utilisé en Europe.

La courbe en trait plein 24 montre que le décodage d'un tel champ conduit encore à des temps différents dans le cas ici d'un constructeur japonais.

Un champ correspondant à une même fonction peut également être codé sur un nombre de bits différent selon les variantes du protocole.

La **Figure 3a** montre un champ 25 correspondant à une consigne de tension Ub codé sur 8 bits.

Le champ 26 correspondant RVSET sur la **Figure 3b** est codé sur 6 bits.

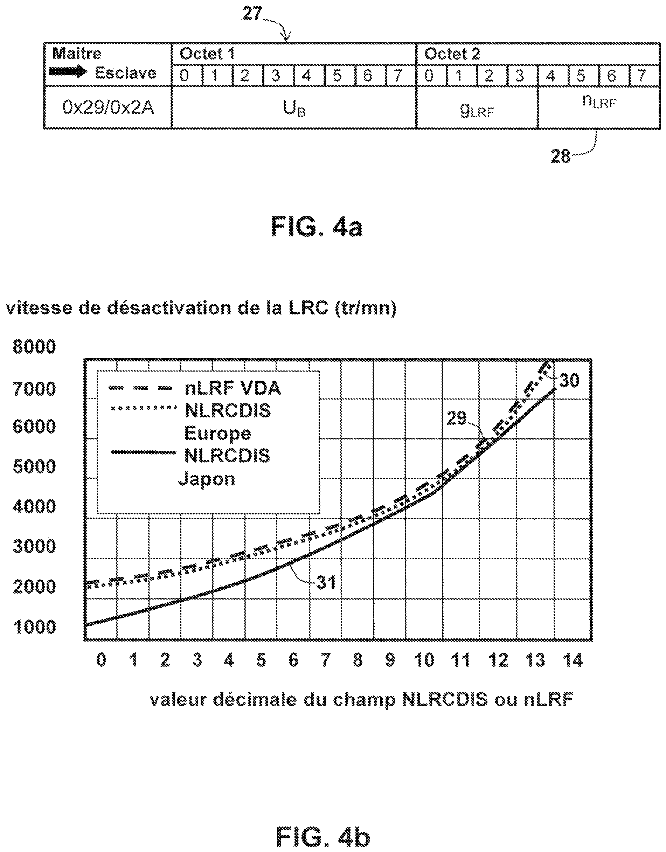

La **Figure 4a** montre une trame d'informations supplémentaire contenant un champ 28 transmettant un paramètre supplémentaire nLRF indiquant une vitesse d'inactivation de la LRC.

La **Figure 4b** montre que les valeurs de vitesse décodées sont identiques selon le protocole VDA (courbe en tireté 29) et en Europe (courbe en pointillé 30).

Au Japon, les valeurs décodées sont différentes des précédentes (courbe en trait plein 31).

Il y a donc une multitude de versions de LIN, car chaque constructeur change l'affectation des champs de bits, leur longueur et l'interprétation de ces champs.

Cette invention a donc pour but de réaliser une interface LIN- régulateur 12 avec une couche de présentation configurable 32 permettant d'adresser les différents types d'encodage de trames actuels tels que le LIN VDA type A, VDA type B, Europe, Japon..., tout en ayant une flexibilité suffisante afin de répondre à de nouveaux formatages (par exemple, celui de tel constructeur américain basé sur du VDA mais avec champs additionnels).

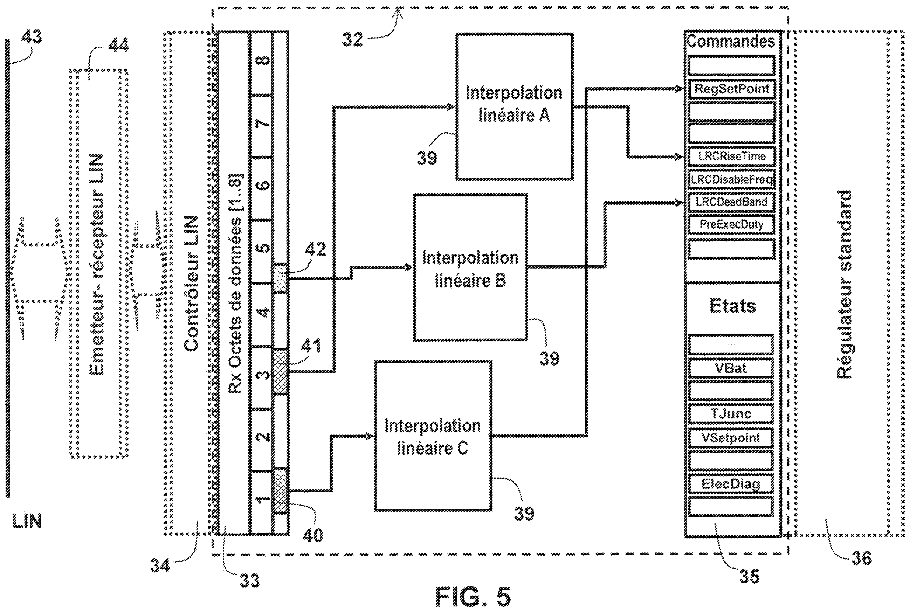

Le principe est d'intercaler entre des registres d'entrée/ sortie 33 d'un contrôleur de bus LIN 34 du régulateur de tension 1, 2 et un registre du contrôle 35 d'un régulateur standard 36 (ou générique) des moyens de routage bidirectionnels 37, 38, par exemple un multiplexeur, et des moyens de correction de formatage bidirectionnels, par exemple un interpolateur 39, comme le montrent les **Figures 5****,** **6** **et** **7****.**

La **Figure 5** montre schématiquement le décodage de trois champs différents 40, 41, 42 correspondant respectivement à trois commandes différentes RegSetPoint, LRCRiseTime et LRCDeadBand du régulateur de tension standard 36.

Les commandes transmises par un dispositif maître sur le réseau LIN 43 sont reçues de manière connue en soi par un émetteur- récepteur de couche physique 44 de l'interface LIN 12 et chargées dans les registres d'entrée/ sortie 33 du contrôleur de bus LIN 34.

Pour des commandes identiques du régulateur standard, les trois champs correspondants 40, 41, 42 peuvent contenir des valeurs différentes selon les variantes du protocole LIN utilisées.

Les interpolateurs 39 permettent de convertir ces valeurs différentes en des commandes standard chargées dans le registre de contrôle 35 du régulateur de tension standard 36.

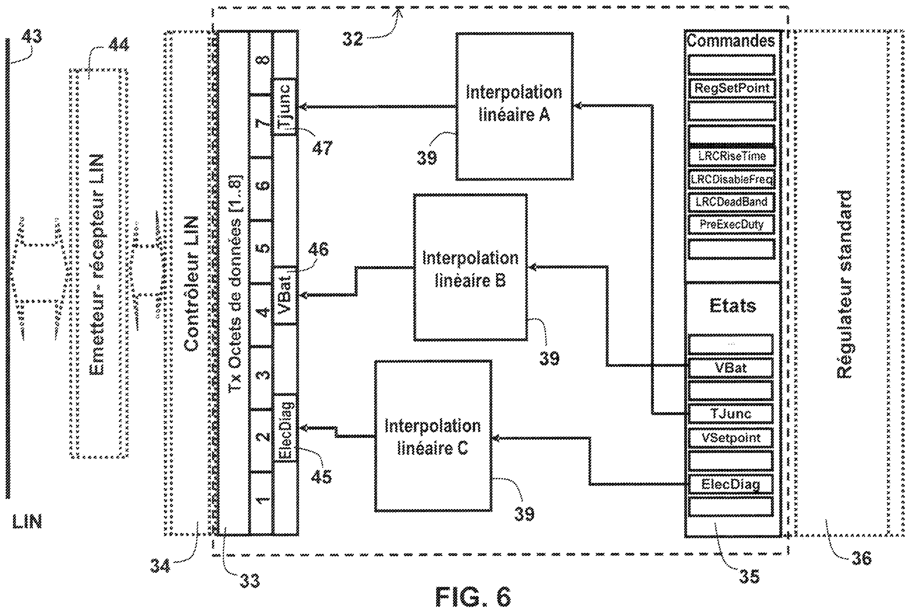

De la même manière, la **Figure 6** montre schématiquement le codage de trois autres champs différents 45, 46, 47 correspondant respectivement à trois états différents ElecDiag, VBat et Tjunc du régulateur de tension standard 36 générés par le régulateur de tension standard 36 à destination du dispositif maître via le bus LIN 43.

Selon les variantes du protocole utilisées, les mêmes variables d'état doivent être traduites par des valeurs différentes chargées dans les registres d'entrée/ sortie 33 du contrôleur de bus 34 avant d'être transmises. Les interpolateurs 39 assurent cette adaptation.

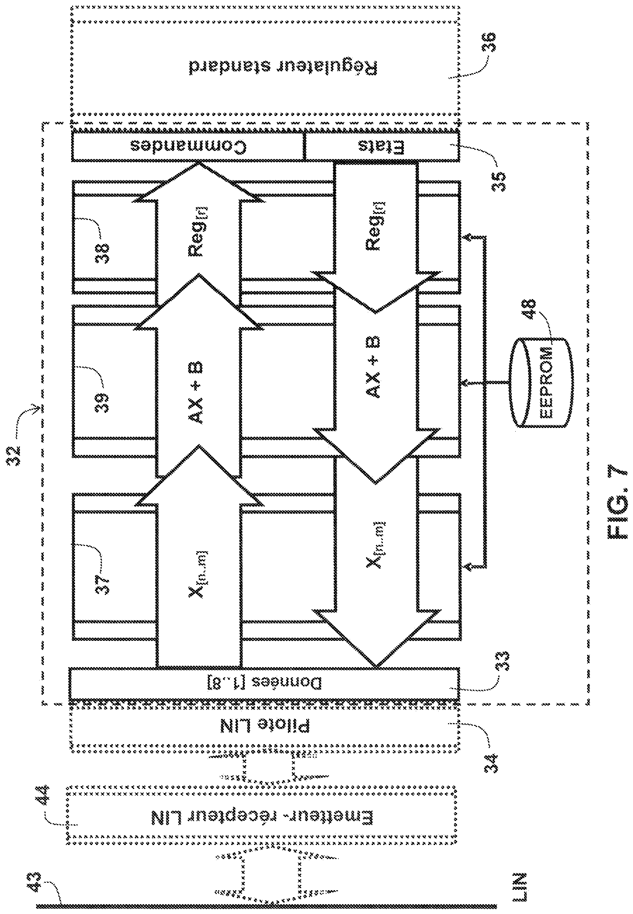

Comme le montre bien la **Figure 7****,** les moyens de routage bidirectionnels 37, 38 qui permettent de faire correspondre un champ quelconque d'une trame de données 14, 15, 16, 17, 18, 20, 27 avec un champ quelconque du registre de contrôle 35 sont constitués par:
- un adresseur de champ binaire paramétrable 37 qui permet d'extraire ou d'écrire un champ 19, 21, 25, 26, 28 contigu au sein de la trame LIN en fonction de son emplacement et de sa longueur;
- un adresseur de registre paramétrable 38 qui permet d'adresser n'importe quel champ du registre de contrôle 35 (commande/ état) du régulateur de tension standard 36.

La programmation de ces éléments 37, 38 de ces moyens de routage est stockée dans un moyen de stockage de données, par exemple une mémoire morte 48 de type EEPROM de faible capacité (par exemple 1 Kbit environ).

Les interpolateurs 39 sont des interpolateurs linéaires paramétrables dont les paramètres sont également stockés en mémoire morte 48.

En effet, l'interpolation est faite par un nombre variable de segments n définis par une valeur limite X_{L}, un gain Aₙ et un offset Bₙ (pour Xₙ< X ≤ Xₙ₊₁ alors Y=AₙX+Bₙ).

Avec ces différents paramètres Aₙ et Bₙ par segment n conservés en mémoire, il est alors possible de réaliser presque n'importe quel type de conversion et donc de supporter la majorité des protocoles LIN actuels.

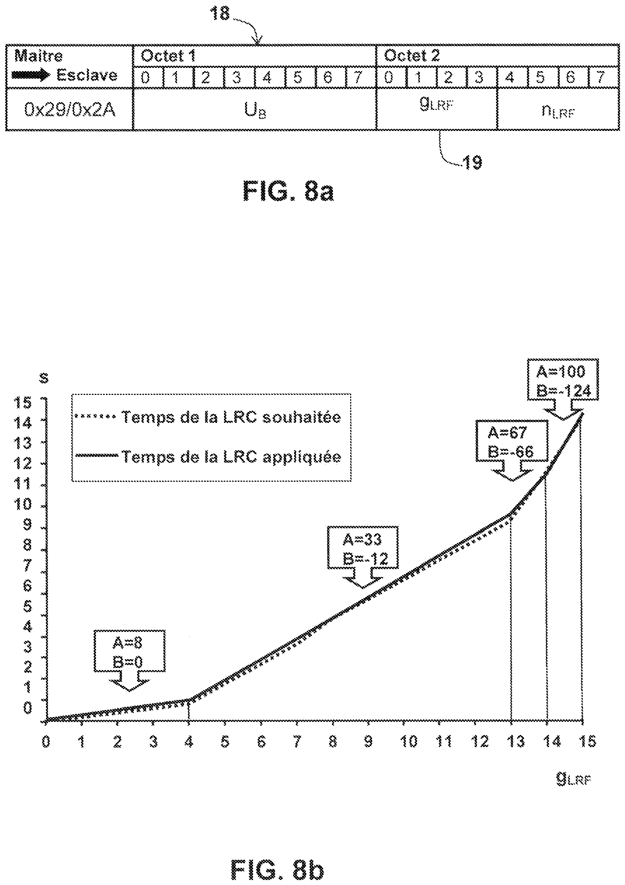

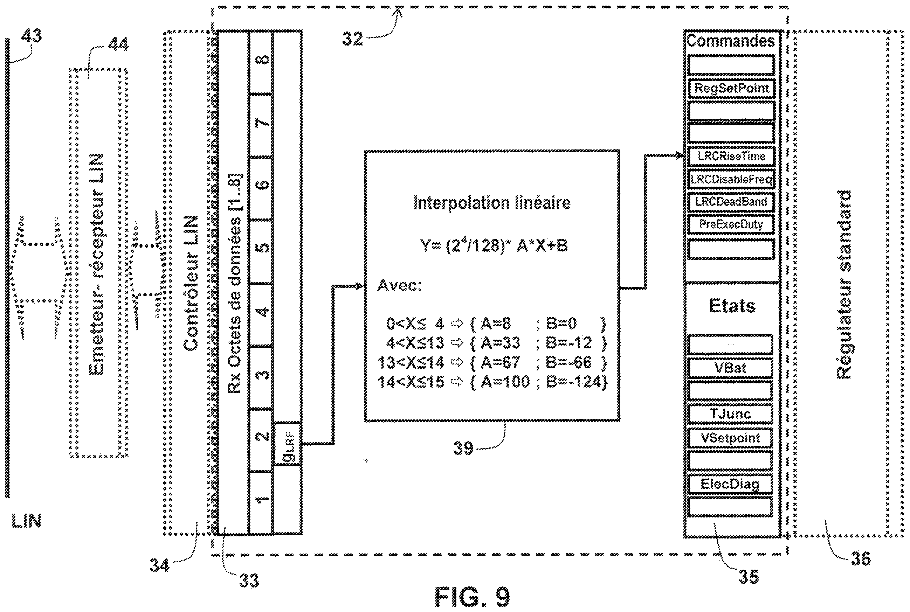

Les **Figures 8a, 8b** **et** **9** illustrent la conversion du champ g_{LRF} dans une trame VDA de type B.

Ce champ 19 correspond à la commande LRCRiseTime.

Le régulateur de tension standard 36 associe à cette commande une LRC d'une durée proportionnelle à la valeur du registre de contrôle LRCRiseTime, laquelle est codée sur 6 bits, et génère une LRC de 0 à 15 secondes.

Comme le montre la **Figure 8a****,** le champ 19 extrait de la trame LIN 18 est quant à lui codé sur 4 bits.

Il est à noter que le calcul Y=A*X+B est réalisé en virgule fixe signée sur 8 bits, et, afin de permettre de générer différents types de gain, est effectivement réalisé par l'opération suivante Y= (2⁴/128)* A*X+B.

La **Figure 8b** montre les quatre segments nécessaires pour effectuer la linéarisation.

La **Figure 9** montre explicitement les calculs qui sont effectués sur chaque segments.

Ces calculs résultent de la mise en oeuvre d'un ou plusieurs programmes dont les séquences d'instructions, mémorisées par un moyen de stockage d'information, sont exécutées par un microprocesseur, un microcontrôleur ou une logique câblée.

Comme il va de soi, l'invention ne se limite pas aux seuls modes de réalisation préférentiels décrits ci-dessus.

Notamment, la méthode d'interpolation exposée n'est pas limitative.

Les structures des trames d'informations ou des trames de données 14, 15, 16, 17, 18, 20, 27 décrites ne sont aussi indiquées qu'à titre d'exemples.

D'autres modes de réalisation ne sortiraient pas du cadre de la présente invention dans la mesure où ils résultent des revendications ci-après.

## Revendications

1. Procédé de communication d'un régulateur de tension (1,2) d'un alternateur (3) de véhicule automobile sur un réseau embarqué (43) dudit véhicule du type de ceux consistant à échanger des trames d'informations (14, 15, 16, 17, 18, 20, 27) sur un bus série (43) selon un ou plusieurs protocoles propriétaires différents compatibles avec un protocole standardisé, **caractérisé en ce que** lesdites trames d'informations (14, 15, 16, 17, 18, 20, 27) sont codées ou décodées en fonction de commandes et d'états d'un régulateur de tension standard (36) présentant des caractéristiques prédéterminées, et **en ce qu'**il comporte les étapes de :
- lecture ou écriture des champs (19, 21, 25, 26, 28) desdites trames d'informations (14, 15, 16, 17, 18, 20, 27) en fonction de leurs emplacements et de leurs longueurs prédéterminés;
- conversion des valeurs desdits champs (19, 21, 25, 26, 28) par une interpolation linéaire; et
- adressage des registres de commande et d'état (35) dudit régulateur de tension standard (36) en fonction de paramètres prédéterminés.

2. Procédé de communication d'un régulateur de tension (1, 2) d'un alternateur (3) de véhicule automobile sur un réseau embarqué (43) selon la revendication 1, **caractérisé en ce que** ledit protocole standardisé est le protocole de Réseau Local d'Interconnexion, LIN.

3. Procédé de communication d'un régulateur de tension (1, 2) d'un alternateur (3) de véhicule automobile sur un réseau embarqué (43) selon la revendication 1 ou 2, **caractérisé en ce qu'**on réalise ladite interpolation (39) par un nombre variable de segments définis chacun par une valeur limite, un gain et un offset prédéterminés.

4. Dispositif de communication (32, 34, 44) d'un régulateur de tension (1, 2) d'un alternateur (3) de véhicule automobile sur un réseau embarqué (43) apte à la mise en oeuvre du procédé de communication selon la revendication 1, dans lequel des trames d'informations (14, 15, 16, 17, 18, 20, 27) sont échangées sur un bus série (43) selon un ou plusieurs protocoles propriétaires différents compatibles avec un protocole standardisé, **caractérisé en ce qu'**il comprend :
des moyens pour coder ou décoder lesdites trames d'informations (14, 15, 16, 17, 18, 20, 27) en fonction de commandes et d'états d'un régulateur de tension standard (36) présentant des caractéristiques prédéterminées ;
des moyens pour lire ou écrire des champs (19, 21, 25, 26, 28) desdites trames d'informations (14, 15, 16, 17, 18, 20, 27) en fonction de leurs emplacements et de leurs longueurs prédéterminés;
des moyens pour convertir des valeurs desdits champs (19, 21, 25, 26, 28) par une interpolation linéaire; et
des moyens pour adresser des registres de commande et d'état (35) dudit régulateur de tension standard (36) en fonction de paramètres prédéterminés.

5. Support d'enregistrement lisible par ordinateur sur lequel est enregistré un programme d'ordinateur comprenant des instructions de code de programme pour l'exécution des étapes du procédé selon l'une quelconque des revendications 1 à 3.

6. Produit programme d'ordinateur comprenant des instructions de code de programme enregistrées sur un support lisible par un ordinateur, pour mettre en oeuvre les étapes du procédé selon l'une quelconque des revendications 1 à 3 lorsque ledit programme fonctionne sur un ordinateur.

7. Régulateur de tension (1, 2) d'un alternateur (3) de véhicule automobile, **caractérisé en ce qu'**il met en oeuvre un dispositif de communication (32, 34, 44), selon la revendication 4 et/ou un support d'enregistrement selon la revendication 5, et/ou un produit programme d'ordinateur selon la revendication 6.

8. Alternateur (3) de véhicule automobile, **caractérisé en ce qu'**il comprend un régulateur de tension (1, 2) selon la revendication 7 précédente.

## Patentansprüche

1. Kommunikationsverfahren eines Spannungsreglers (1, 2) einer Lichtmaschine (3) eines Kraftfahrzeugs bei einem Bordnetzwerk (43) des Fahrzeugs vom Typ jener, die darin bestehen, Informationsrahmen (14, 15, 16, 17, 18, 20, 27) auf einem seriellen Bus (43) nach einem oder mehreren verschiedenen proprietären Protokollen, die mit einem standardisierten Protokoll kompatibel sind, auszutauschen, **dadurch gekennzeichnet, dass** die Informationsrahmen (14, 15, 16, 17, 18, 20, 27) in Abhängigkeit von Steuerungen und Zuständen eines Standard-Spannungsreglers (36), der vorbestimmte Merkmale aufweist, codiert oder decodiert werden, und dass es die folgenden Schritte umfasst:
- Lesen oder Schreiben der Felder (19, 21, 25, 26, 28) der Informationsrahmen (14, 15, 16, 17, 18, 20, 27) in Abhängigkeit von ihren Standorten und ihren vorbestimmten Längen;
- Umwandlung der Werte der Felder (19, 21, 25, 26, 28) durch eine lineare Interpolation; und
- Adressieren der Steuer- und Zustandsregister (35) des Standard-Spannungsreglers (36) in Abhängigkeit von vorbestimmten Parametern.

2. Kommunikationsverfahren eines Spannungsreglers (1, 2) einer Lichtmaschine (3) eines Kraftfahrzeugs bei einem Bordnetzwerk (43) nach Anspruch 1, **dadurch gekennzeichnet, dass** das standardisierte Protokoll das Protokoll einer lokalen Netzwerkverbindung LIN ist.

3. Kommunikationsverfahren eines Spannungsreglers (1, 2) einer Lichtmaschine (3) eines Kraftfahrzeugs bei einem Bordnetzwerk (43) nach Anspruch 1 oder 2, **dadurch gekennzeichnet, dass** die Interpolation (39) durch eine variable Anzahl von Segmenten durchgeführt wird, die jeweils durch einen Grenzwert, ein Gain und ein Offset definiert sind.

4. Vorrichtung zur Kommunikation (32, 34, 44) eines Spannungsreglers (1, 2) einer Lichtmaschine (3) eines Kraftfahrzeugs bei einem Bordnetzwerk (43), die für den Einsatz des Kommunikationsverfahrens nach Anspruch 1 geeignet ist, bei der Informationsrahmen (14, 15, 16, 17, 18, 20, 27) auf einem seriellen Bus (43) nach einem oder mehreren verschiedenen proprietären Protokollen, die mit einem standardisierten Protokoll kompatibel sind, ausgetauscht werden, **dadurch gekennzeichnet, dass** sie umfasst:
Mittel zum Codieren oder Decodieren der Informationsrahmen (14, 15, 16, 17, 18, 20, 27) in Abhängigkeit von Steuerungen und Zuständen eines Standard-Spannungsreglers (36), der vorbestimmte Merkmale aufweist;
Mittel zum Lesen oder Schreiben der Felder (19, 21, 25, 26, 28) der Informationsrahmen (14, 15, 16, 17, 18, 20, 27) in Abhängigkeit von ihren Standorten und ihren vorbestimmten Längen;
Mittel zur Umwandlung der Werte der Felder (19, 21, 25, 26, 28) durch eine lineare Interpolation; und
Mittel zum Adressieren der Steuer- und Zustandsregister (35) des Standard-Spannungsreglers (36) in Abhängigkeit von vorbestimmten Parametern.

5. Aufzeichnungsträger, der von einem Computer lesbar ist, auf dem ein Computerprogramm aufgezeichnet ist, umfassend Programmcodeanweisungen für die Ausführung der Schritte des Verfahrens nach einem der Ansprüche 1 bis 3.

6. Computerprogrammprodukt, umfassend Programmcodebefehle, die auf einem von einem Computer lesbaren Träger aufgezeichnet sind, um die Schritte des Verfahrens nach einem der Ansprüche 1 bis 3 einzusetzen, wenn das Programm auf einem Computer ausgeführt wird.

7. Spannungsregler (1, 2) einer Lichtmaschine (3) eines Kraftfahrzeugs, **dadurch gekennzeichnet, dass** er eine Kommunikationsvorrichtung (32, 34, 44) nach Anspruch 4 und/oder einen Aufzeichnungsträger nach Anspruch 5 und/oder ein Computerprogrammprodukt nach Anspruch 6 einsetzt.

8. Lichtmaschine (3) eines Kraftfahrzeugs, **dadurch gekennzeichnet, dass** sie einen Spannungsregler (1, 2) nach dem vorhergehenden Anspruch 7 umfasst.

## Claims

1. Communication method of a voltage regulator (1, 2) of a motor vehicle alternator (3) on an onboard network (43) of said vehicle, of the type consisting in exchanging information frames (14, 15, 16, 17, 18, 20, 27) on a serial bus (43) according to one or more different proprietary protocols compatible with a standardized protocol, **characterized in that** said information frames (14, 15, 16, 17, 18, 20, 27) are encoded or decoded on the basis of commands and states of a standard voltage regulator (36) having predetermined characteristics, and **in that** it comprises the steps of:
- reading or writing the fields (19, 21, 25, 26, 28) of said information frames (14, 15, 16, 17, 18, 20, 27) on the basis of their predetermined locations and lengths;
- converting the values of said fields (19, 21, 25, 26, 28) by a linear interpolation; and
- addressing the command and state registers (35) of said standard voltage regulator (36) on the basis of predetermined parameters.

2. Communication method of a voltage regulator (1, 2) of a motor vehicle alternator (3) on an onboard network (43) according to Claim 1, **characterized in that** said standardized protocol is the Local Interconnect Network (LIN).

3. Communication method of a voltage regulator (1, 2) of a motor vehicle alternator (3) on an onboard network (43) according to Claim 1 or 2, **characterized in that** said interpolation (39) is carried out by a variable number of segments, each defined by a limit value, a gain and an offset which are predetermined.

4. Communication device (32, 34, 44) of a voltage regulator (1, 2) of a motor vehicle alternator (3) on an onboard network (43) capable of implementing the communication method according to Claim 1, wherein information frames (14, 15, 16, 17, 18, 20, 27) are exchanged on a serial bus (43) according to one or more different proprietary protocols compatible with a standardized protocol, **characterized in that** it comprises:
means for encoding or decoding said information frames (14, 15, 16, 17, 18, 20, 27) on the basis of commands and states of a standard voltage regulator (36) having predetermined characteristics;
means for reading or writing fields (19, 21, 25, 26, 28) of said information frames (14, 15, 16, 17, 18, 20, 27) on the basis of their predetermined locations and lengths;
means for converting values of said fields (19, 21, 25, 26, 28) by a linear interpolation; and
- means for addressing command and state registers (35) of said standard voltage regulator (36) on the basis of predetermined parameters.

5. Computer-readable recording medium on which is recorded a computer program comprising program code instructions for executing the steps of the method according to any of Claims 1 to 3.

6. Computer program product comprising program code instructions recorded on a computer-readable medium, for executing the steps of the method according to any of Claims 1 to 3 when said program is run on a computer.

7. Voltage regulator (1, 2) of a motor vehicle alternator (3), **characterized in that** it uses a communication device (32, 34, 44) according to Claim 4, and/or a recording medium according to Claim 5, and/or a computer program product according to Claim 6.

8. Motor vehicle alternator (3), **characterized in that** it comprises a voltage regulator (1, 2) according to the preceding Claim 7.
